# EUROPÄISCHE PATENTSCHRIFT

(11) **EP 1 646 846 B1**
(45) Veröffentlichungstag und Bekanntmachung des Hinweises auf die Patenterteilung: **02.04.2008**
(21) Anmeldenummer: 04740805.9
(22) Anmeldetag: 08.07.2004
(51) Int. Cl.: G01D 13/22

(54) **SCHEIBENZEIGER**
DISC INDICATOR
INDICATEUR SUR DISQUE

(30) Priorität: 10.07.2003 DE 10331443
(43) Veröffentlichungstag der Anmeldung: 19.04.2006
(73) Patentinhaber: Johnson Controls Automotive Electronics GmbH, 75196 Remchingen (DE)
(72) Erfinder: SÜSS, Manfred, 75196 Remchingen (DE); MAYER, Martin, 74889 Sinsheim (DE)
(74) Vertreter: Hemmelmann, Klaus
(86) Internationale Anmeldenummer: PCT/EP2004/007502
(87) Internationale Veröffentlichungsnummer: WO 2005/005931

(56) Entgegenhaltungen:
- EP-A1- 0 492 543
- EP-A1- 0 985 912
- DE-A1- 19 903 202
- DE-A1- 19 916 221
- US-A- 4 020 787
- US-A1- 2002 108 554

## Beschreibung

Die vorliegende Erfindung betrifft ein Analoganzeigeinstrument, insbesondere für den Einsatz in Armaturentafeln von Kraftfahrzeugen, aufweisend eine vermittels eines Radiallagers drehbar gelagerte Zeigerscheibe, die eine vor einer Skala verschwenkbare Zeigerfahne trägt, wobei das Radiallager ein Gleitelement und ein Führungselement aufweist, wobei eines der Elemente eine Ringstruktur und das andere Element ein zur Aufnahme der Ringstruktur geeignetes Aufnahmemittel aufweist und wobei Ringstruktur und Aufnahmemittel das Lager bilden.

### Stand der Technik

Gattungsgemäße Scheibenzeiger mit Radiallagern sind von Instrumenten aus Kraftfahrzeugen bekannt. Dabei werden in diesem Zusammenhang nur solche Instrumente als "Scheibenzeiger" bezeichnet, bei denen die Zeigerscheibe nicht auf einer drehbar gelagerten Welle gehalten, sondern vermittels einer geführten Ringstruktur drehbar gelagert ist. Schließlich liegt die Besonderheit derartiger Scheibenzeiger darin, dass auf die zentrale Welle verzichtet werden kann. Dadurch ist eine große Flexibilität hinsichtlich der gestalterischen Möglichkeiten des Instrumentes gegeben.

Ein derartiger Scheibenzeiger ist beispielsweise in der DE 199 16 221 A1 gezeigt, wobei dieser eine den Zeiger tragende Scheibe aufweist, die an ihrem Außenrand zwischen drei Führungsrollen gehalten ist. Dabei wird eine der Rollen von einem Schrittmotor angetrieben.

In der DE 199 03 202 A1 werden Zeigersymbole tragende Abdeckungen mit kreisrunder Außenkontur angeführt, die in den Aussparungen einer Platte oder Blende drehbar gelagert sind. Dabei sind in den Abdeckungen Wälzelemente angebracht, um bei der Lagerung eine Reibungsminimierung zu bewirken. Der die Drehbewegung auslösende Antrieb wird durch einen auf einen Zahnkranz der Abdeckung wirkenden Elektromotor bereitgestellt.

Die EP 492 543 A1 beschreibt eine Zeigerplatte, die von einem ringförmigen Ultraschallmotor angetrieben wird in der Weise, daß die Zeigerplatte mit dem Rotor dieses Ultraschallmotors drehfest verbunden ist, indem der Rand der Zeigerplatte orthogonal zur Plattenebene orientiert ausgebildet ist, wodurch eine Einfassung für den Rotorteil des Ultraschallmotors bereitgestellt wird. Ein Radiallager wird durch diese Konstruktion nicht gebildet.

Aus der US 2002/0108554 ist ein Analoganzeigeinstrument bekannt.

Damit sind die bei allen bekannten Instrumenten mit Scheibenzeiger angegebenen Lagerungsarten aufwändig und bauteilintensiv, was eine dementsprechend teure Herstellung bedingt. Zudem sind derartige Instrumente anfällig im Betrieb. Obwohl Scheibenzeiger eine Reihe von Vorteilen haben gegenüber herkömmlichen Instrumenten, die eine am Ende einer Welle gehaltenen Zeigerfahne tragen, konnten sich diese Instrumente vor allem wegen der unakzeptablen Störanfälligkeit bei hohen Produktionskosten bislang nicht durchsetzen.

### Aufgabe

Aufgabe der vorliegenden Erfindung ist es nunmehr, ein Analoganzeigeinstrument mit Scheibenzeiger zu schaffen, das sich durch eine einfache und kompakte Bauweise auszeichnet und das bei kostengünstiger Herstellung eine große Zuverlässigkeit bietet.

### Lösung

Diese Aufgabe wird durch ein gattungsgemäßes Instrument gelöst, bei dem das Radiallager ein Gleitlager ist, wobei ein Mittel der Aufnahme unmittelbar gleitend an einer Wandung der Ringstruktur (9) anliegt.

Der erfindungswesentliche Gedanke liegt in der starken Vereinfachung der Lagerung des Scheibenzeigers. Die Vereinfachung wird dadurch erreicht, dass die Zeigerscheibe unmittelbar in einer kompakten und robusten Aufnahme gelagert wird. Dabei liegt der Erfindung die Erkenntnis zugrunde, dass an das Lager eines solchen Zeigers wegen der relativ kleinen Drehgeschwindigkeiten und Drehzahlen auch nur verhältnismäßig geringe Anforderungen zu stellen sind. Schließlich treten bei den zur Debatte stehenden Instrumenten nur vergleichsweise langsame Verschwenkungen in die eine und die andere Richtung auf. Diese können schon mit "primitiven" Gleitlagern durchgeführt werden, bei denen Gleitelemente und Führungselemente aus einfach zu bearbeitenden Materialien, wie Kunststoff, gefertigt werden. Zudem ist die Herstellung derart einfach gelagerter Scheibenzeiger wegen der im Vergleich zu stark belasteten Gleitlagern relativ großen Toleranzen unaufwendig und somit kostengünstig. Insbesondere ist bei solcherart geringen Beanspruchungen keine erhöhte Gleitfähigkeit und auch keine Kühlung der Lager nötig, um ein Fressen zu vermeiden. Ein weiterer Vorteil ist, dass von den erfindungsgemäßen Scheibenzeigern mehrere ineinander angeordnet werden können, wobei sogar eine Zeigerscheibe die Lagerung für die benachbarte Zeigerscheibe bilden kann.

Das Radiallager ist somit im Falle des unmittelbaren Kontaktes von Gleitelement und Führungselement als Gleitlager ausgebildet, wobei ein oder mehrere Mittel der Aufnahme unmittelbar gleitend an einer Wandung der Ringstruktur anliegen. An dieser Stelle sei auch darauf hingewiesen, dass nicht nur kreisförmige Scheiben als Zeigerscheibe eingesetzt werden können, sondern dass auch andere Geometrien, beispielsweise eckige Scheiben, als Kreissektor oder Kreissegment ausgebildete Scheiben für Zeigerscheiben taugen. Zur Umsetzung des erfindungsgemäßen Grundgedankens sind gerade wegen der jeweils möglichen kinematischen Umkehr im Verhältnis von Gleitelement und Führungselement eine Vielzahl von Ausführungsformen denkbar. Alte Formen haben jedoch folgende Vorteile: Es lassen sich mit den erfindungsgemäßen Lagerungen besonders kompakte und robuste Instrumente mit Scheibenzeiger fertigen, die sich durch eine große Zuverlässigkeit und geringe Herstellungskosten auszeichnen. Vor allem bieten die erfindungsgemäßen Instrumente eine Vielzahl von Möglichkeiten der Gestaltung im Hinblick auf ein individuelles Design und ein übersichtliches und informatives Layout der Anzeigen insbesondere im Verbund eines Kombiinstrumentes.

Diese genannten Vorteile kommen dann besonders stark zum Tragen, wenn die Zeigerscheibe das Gleitelement aufweist und dieses die Ringstruktur trägt. Dabei ist der Begriff "Ringstruktur" hier ganz allgemein zu verstehen. So können unter Ringstruktur ringförmig gebogene Schlitze, erhabene Einzelelemente in ringförmiger Anordnung oder ein zylindrisch geformter Absatz subsumiert werden. Auch muss der Ring nicht einen vollen Kreisumfang ausbilden, sondern braucht nur einen Teilkreis einzunehmen.

In der genannten Ausführungsform ist die mit der Ringstruktur versehene Zeigerscheibe gegenüber dem festen Führungselement drehbar. Um diese Drehung durchführen zu können, ist es vorteilhaft, wenn die Zeigerscheibe mit einem Zahnkranz versehen ist, wobei der Zahnkranz direkt an die Zeigerscheibe angeformt oder als separates Bauteil mit der Zeigerscheibe drehfest verbunden sein kann. An dem Zahnkranz kann das Ritzel eines Schrittmotors unmittelbar oder über ein Getriebe angreifen. Statt eines Schrittmotors wird in einer anderen Ausführungsform ein Piezoantrieb eingesetzt, wobei der Schrittmotor gewisse Vorteile bezüglich seiner definierten Ansteuerung haben kann.

Im Hinblick auf eine besonders einfache Konstruktion und auf eine übersichtliche Gestaltung der Anzeigetafel ist es vorteilhaft, die Zeigerscheibe nicht als komplett ausgefüllte Scheibe, sondern als im Zentrum offene und insbesondere schmale Ringscheibe auszubilden. Dabei kann die Breite des Randes vergleichsweise klein gegenüber dem Durchmesser der Öffnung sein. Damit kann gewährleistet werden, dass solche Analoginstrumente auch mit einem geringen Platzangebot auf einer Anzeigetafel auskommen. Es ist in dieser Hinsicht auch vorteilhaft, die Ringstruktur einfach auf der Scheibenfläche als zylindrischen Ansatz aufzusetzen und insbesondere anzuformen, wobei dann der Ansatz das Gleitelement bildet. Selbstverständlich braucht die zylindrische Form nicht vollständig zu sein. Auch eine nur teilweise vollständige Geometrie reicht aus, solange die Führung ohne Verhaken und Verkanten gewährleistet ist.

Vorteilhafterweise liegt der zylindrische Ansatz mit einer seiner beiden Wandungen unmittelbar gleitend an der Wandung eines entsprechend zylindrisch geformten Lagerelementes mit an. Die Passung der beiden Elemente ist derart vorzusehen, dass in Abhängigkeit vom Material ein problemloses Gleiten möglich ist. In dieser Ausführungsform ist es wegen der besonders einfachen Handhabung bei der Produktion vorteilhaft, wenn das zylindrisch geformte Lagerelement das entsprechend innen angeordnete Gleitelement umgibt, so dass die Außenwand des Gleitelementes an der Innenwand des Lagerelementes entlang gleitet. Das bewegliche Gleitelement gleitet demnach innerhalb der ortsfesten Lagerung, so dass ein guter Schutz des Scheibenzeigers vor äußerer Beeinträchtigung gewährleistet ist.

Eine besonders einfach umzusetzende und kostengünstige Ausführungsform sieht vor, das Gleitelement und/oder das Führungselement aus gleitfähigem Kunststoff, insbesondere aus Polyoxymethylen (POM), zu fertigen, insbesondere zu spritzen. Gleitfähige Kunststoffe sind kommerziell erhältlich und unterscheiden sich in der Art der Verarbeitung nicht von herkömmlichen Kunststoffen. Der Einsatz dieser Werkstoffe macht es möglich, auf die sonst angezeigte besondere Behandlung oder Beschichtung der Oberflächen zu verzichten. Zudem wird der Einsatz von Schmiermitteln unnötig.

### Figuren

Nachfolgend wird die Erfindung anhand des in den Figuren 1 bis 3 gezeigten Ausführungsbeispieles näher beschrieben. Es zeigen:
- **Figur 1**: ein Instrument mit Scheibenzeiger,
- **Figur 2**: eine rückwärtige Ansicht des Instrumentes in Explosionsdarstellung und
- **Figur 3**: eine Vorderansicht des Instrumentes in Explosionsdarstellung.

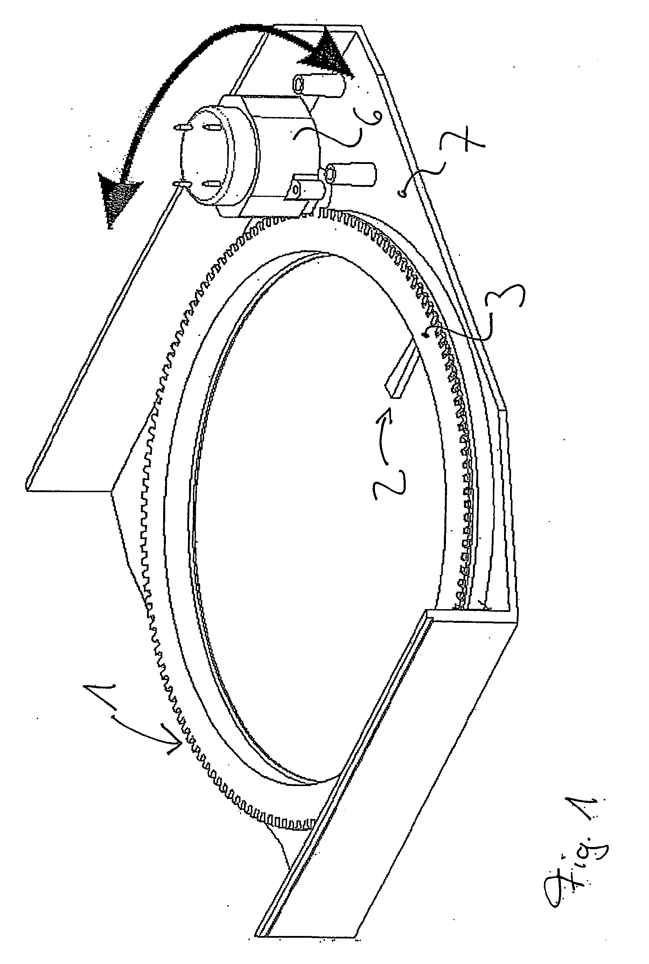

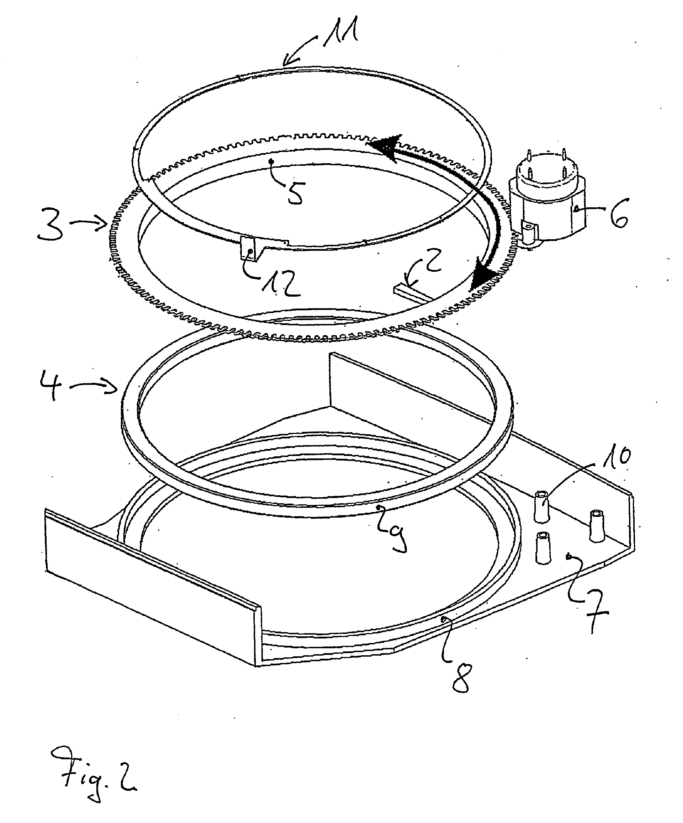

Figur 1 zeigt ein Analoganzeigeinstrument für den Einsatz in Armaturentafeln von Kraftfahrzeugen. Dieses hat eine drehbar gelagerte Zeigerscheibe 1, die eine vor einer nicht dargestellten Skala verschwenkbare Zeigerfahne 2 trägt. Die Zeigerfahne 2 ist in diesem Fall an den Innenradius eines Zahnkranzes 3 angeformt (Figur 2) und zeigt mit seiner Spitze nach außen. Eine mit der Spitze nach innen weisende Zeigerfahne 2 ist ebenfalls denkbar. Der Zahnkranz 3 ist drehfest, insbesondere durch eine Klebverbindung, auf einem Lagerring 4 gehalten, wobei der Zahnkranz 3 mit einem Zentrierabsatz 5 in den Innenradius des Lagerrings 4 eingreift. Er kann aus einem durchsichtigen Material wie PMMA oder PC gefertigt sein. Der Lagerring 4 bildet mit dem aufgeklebten Zahnkranz 3 die Zeigerscheibe 1. Lagerring 4 und Zahnkranz 3 können auch einteilig ausgebildet sein. In den Zahnkranz 3 greift das Ritzel eines Schrittmotors 6 über ein Getriebe ein. Mit dem Schrittmotor 6 kann die Zeigerscheibe 1 in eine Drehbewegung (Doppelpfeil) nach beiden Richtungen versetzt werden.

Die Zeigerscheibe 1 ist mittels eines Radiallagers drehbar gelagert. In diesem Fall ist das Radiallager ein einfach aufgebautes Gleitlager, bei dem die Zeigerscheibe 1 das Gleitelement bildet. Das Führungselement ist Teil einer Frontblende 7 eines Kombiinstruments, die mit einer kreisrunden Öffnung einen Rahmen ausbildet. An der Rückseite der Frontblende 7 ist als Lagerelement eine zylindrische Aufnahme 8 angeformt. Die Aufnahme 8 nimmt eine entsprechend zylindrisch geformte Ringstruktur der Zeigerscheibe 1 auf. Die Ringstruktur ist in diesem Fall ein zylindrischer Ansatz 9, der an die Scheibenfläche des Lagerrings 4 angeformt ist. Im zusammengesetzten Zustand greift der zylindrische Ansatz 9 in die zylindrische Aufnahme 8 ein, wobei beide Teile unmittelbar gleitend mit ihren Wandungen aneinander liegen. Hier umgibt die zylindrisch geformte Aufnahme 8 den zylindrischen Ansatz 9, so dass die Außenwand des Gleitelementes an der Innenwand des Lagerelementes gleitet.

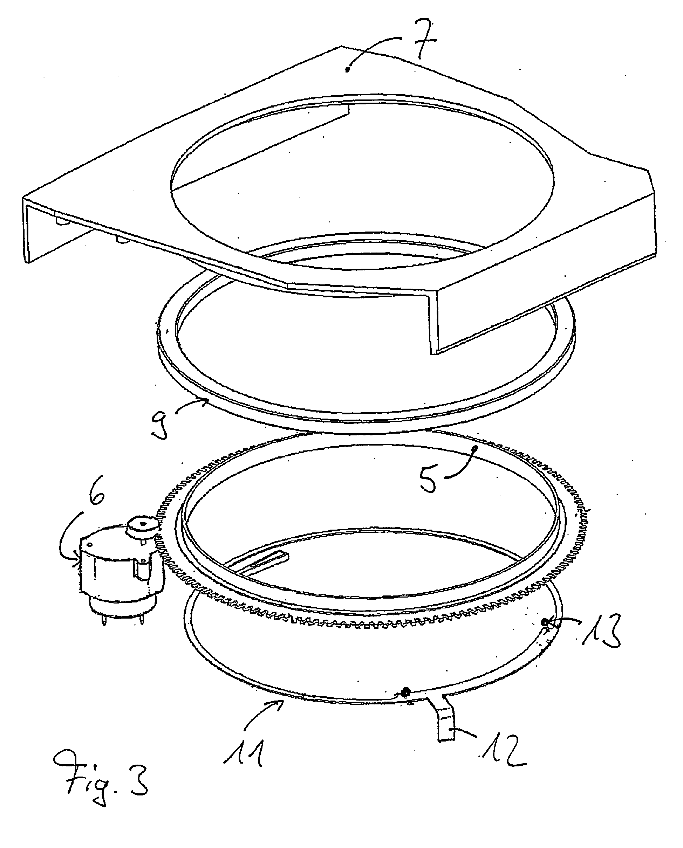

In eine von den Zapfen 10 gebildete Halterung an der Rückseite der Frontblende 7 wird der Schrittmotor 6 eingesetzt. Die Zeigerfahne 2 ist beleuchtet, wobei auf die Zeigerscheibe 1 eine flexible Leiterplattenfolie 11 aufgeklebt ist, die über ein Kontaktelement 12 kontaktiert ist. Vermittels der Leiterplattenfolie 11 werden die Zeigerfahne 2 beleuchtende Leuchtdioden 13 (Figur 3) angesteuert.

### Bezugszeichen

- 1: Zeigerscheibe
- 2: Zeigerfahne
- 3: Zahnkranz
- 4: Lagerring
- 5: Zentrierabsatz
- 6: Schrittmotor
- 7: Frontblende
- 8: Aufnahme
- 9: Ansatz
- 10: Zapfen
- 11: Leiterplattenfolie
- 12: Kontaktelement
- 13: Leuchtdiode

## Patentansprüche

1. Analoganzeigeinstrument, insbesondere für den Einsatz in Armaturentafeln von Kraftfahrzeugen, aufweisend eine vermittels eines Radiallagers drehbar gelagerte Zeigerscheibe (1), die eine vor einer Skala verschwenkbare Zeigerfahne (2) trägt, wobei das Radiallager ein Gleitelement und ein Führungselement aufweist, wobei eines der Elemente eine Ringstruktur (9) und das andere Element ein zur Aufnahme der Ringstruktur (9) geeignetes Aufnahmemittel (8) aufweist und wobei Ringstruktur (9) und Aufnahmemittel (8) das Lager bilden,
**dadurch gekennzeichnet,**
**dass** das Radiallager ein Gleitlager ist, wobei ein Mittel der Aufnahme unmittelbar gleitend an einer Wandung der Ringstruktur (9) anliegt.

2. Instrument nach Anspruch 1,
**dadurch gekennzeichnet,**
**dass** die Zeigerscheibe (1) das gegenüber dem festen Führungselement drehbare Gleitelement aufweist, mit dem die Ringstruktur (9) verbunden ist.

3. Instrument nach Anspruch 2,
**dadurch gekennzeichnet,**
**dass** die Zeigerscheibe (1) einen Zahnkranz (3) aufweist, der insbesondere als separates Bauteil drehfest mit der Zeigerscheibe (1) verbunden ist, wobei ein Schrittmotor (6) die Zeigerscheibe (1) vermittels des Zahnkranzes (3) in Drehbewegung versetzt.

4. Instrument nach einem der vorherigen Ansprüche,
**dadurch gekennzeichnet,**
**dass** die Zeigerscheibe (1) eine Ringscheibe aufweist, wobei auf der Fläche der Ringscheibe die Ringstruktur als zylindrischer Ansatz (9) aufgesetzt, insbesondere angeformt, ist.

5. Instrument nach Anspruch 4,
**dadurch gekennzeichnet,**
**dass** der zylindrische Ansatz (9) mit einer Wandung gleitend an der Wandung eines entsprechend zylindrisch geformten Lagerelementes anliegt.

6. Instrument nach Anspruch 5,
**dadurch gekennzeichnet,**
**dass** das zylindrisch geformte Lagerelement den zylindrischen Ansatz (9) umgibt, so dass die Außenwand des Ansatzes (9) an der Innenwand des Lagerelementes gleitet.

7. Instrument nach einem der vorherigen Ansprüche,
**gekennzeichnet durch**
eine Frontblende (7), die einen Rahmen ausbildet, wobei an der Rückseite des Rahmens das Lagerelement als zylindrischer Lagerring (8) angesetzt, insbesondere angeformt ist.

8. Instrument nach einem der vorherigen Ansprüche,
**dadurch gekennzeichnet,**
**dass** das Gleitelement und/oder das Führungselement aus gleitfähigem Kunststoff, insbesondere aus Polyoxymethylen (POM), gefertigt sind.

9. Instrument nach einem der vorherigen Ansprüche,
**gekennzeichnet durch**
eine beleuchtbare Zeigerfahne (2), die in radialer Richtung ausgerichtet und mit der Zeigerscheibe (1) verbunden ist.

10. Instrument nach Anspruch 9,
**dadurch gekennzeichnet,**
**dass** die Zeigerfahne (2) als nach innen gerichtete Anformung an die Ringscheibe oder den Zahnkranz (3) angeformt ist.

11. Instrument nach einem der vorherigen Ansprüche,
**dadurch gekennzeichnet,**
**dass** die Zeigerscheibe (1) eine flexible Leiterplattenfolie (11) aufweist, die auf den Zahnkranz (3) aufgeklebt und über ein Kontaktelement (12) kontaktiert ist, wobei über die Leiterplattenfolie (11) eine die Zeigerfahne (2) beleuchtende Leuchtdiode (13) angesteuert wird.

## Claims

1. Analog display instrument, in particular for use in dashboards in motor vehicles, having an indicator disc (1) which is mounted such that it can be rotated by means of a radial bearing and is fitted with a pointer (2) which can be pivoted in front of a scale, with the radial bearing having a sliding element and a guide element, with one of the elements having a ring structure (9) and the other element having a holding means (8) which is suitable to hold the ring structure (9), and with the ring structure (9) and the holding means (8) forming the bearing,
**characterized in that**
the radial bearing is a journal bearing, with a means for holding resting directly on one wall of the ring structure (9) such that it can slide.

2. Instrument according to Claim 1,
**characterized in that**
the indicator disc (1) has the sliding element which can rotate with respect to the fixed guide element and to which the ring structure (9) is connected.

3. Instrument according to Claim 2,
**characterized in that**
the indicator disc (1) has a toothed rim (3) which is connected to the indicator disc (1) such that they rotate together and, in particular, is in the form of a separate component, with a stepping motor (6) rotating the indicator disc (1) by means of the toothed rim (3).

4. Instrument according to one of the preceding claims,
**characterized in that**
the indicator disc (1) has an annular disc, with the ring structure being formed, in particularly integrally formed, as a cylindrical attachment (9) on the surface of the annular disc.

5. Instrument according to Claim 4,
**characterized in that**
one wall of the cylindrical attachment (9) rests in a sliding manner on the wall of a correspondingly cylindrically shaped bearing element.

6. Instrument according to Claim 5,
**characterized in that**
the cylindrically shaped bearing element surrounds the cylindrical attachment (9), such that the outer wall of the attachment (9) slides on the inner wall of the bearing element.

7. Instrument according to one of the preceding claims,
**characterized by**
a front panel (7) which forms a frame, with the bearing element being formed, in particularly integrally formed, as a cylindrical bearing ring (8) on the rear face of the frame.

8. Instrument according to one of the preceding claims,
**characterized in that**
the sliding element and/or the guide element are/is manufactured from plastic which can slide, in particular from polyoxymethylene (POM).

9. Instrument according to one of the preceding claims,
**characterized by**
a pointer (2) which can be illuminated, is aligned in the radial direction and is connected to the indicator disc (1).

10. Instrument according to Claim 9,
**characterized in that**
the pointer (2) is integrally formed on the annular disc or on the toothed rim (3) as an attachment which points inwards.

11. Instrument according to one of the preceding claims,
**characterized in that**
the indicator disc (1) has a flexible printed circuit (11), which is adhesively bonded to the toothed rim (3) and with which contact is made via a contact element (12), with a light-emitting diode (13), which illuminates the pointer (2), being driven via the flexible printed circuit (11).

## Revendications

1. Instrument indicateur analogique, notamment pour l'utilisation dans des tableaux de bord de véhicules automobiles, présentant un disque indicateur (1) monté à rotation au moyen d'un palier radial, qui porte un ergot indicateur (2) pouvant pivoter devant une échelle, le palier radial présentant un élément glissant et un élément de guidage, l'un des éléments présentant une structure annulaire (9) et l'autre élément un moyen de réception (8) approprié pour recevoir la structure annulaire (9), et la structure annulaire (9) et le moyen de réception (8) formant ensemble le palier,
**caractérisé en ce que**
le palier radial est un palier lisse, un moyen de réception s'appliquant en glissant directement sur une paroi de la structure annulaire (9).

2. Instrument selon la revendication 1,
**caractérisé en ce que**
le disque indicateur (1) présente l'élément glissant pouvant pivoter par rapport à l'élément de guidage fixe, élément glissant auquel la structure annulaire (9) est connectée.

3. Instrument selon la revendication 2,
**caractérisé en ce que**
le disque indicateur (1) présente une couronne dentée (3) qui est connectée de manière solidaire en rotation au disque indicateur (1) notamment en tant que composant séparé, un moteur pas à pas (6) entraînant le disque indicateur (1) au moyen de la couronne dentée (3) suivant un mouvement de rotation.

4. Instrument selon l'une quelconque des revendications précédentes,
**caractérisé en ce que**
le disque indicateur (1) présente un disque annulaire, la structure annulaire étant posée sous forme d'insert cylindrique (9) sur la surface du disque annulaire, notamment par moulage.

5. Instrument selon la revendication 4,
**caractérisé en ce que**
l'insert cylindrique (9) s'applique avec une paroi glissant contre la paroi d'un élément de palier de forme cylindrique correspondante.

6. Instrument selon la revendication 5,
**caractérisé en ce que**
l'élément de palier de forme cylindrique entoure l'insert cylindrique (9) de sorte que la paroi extérieure de l'insert (9) glisse sur la paroi intérieure de l'élément de palier.

7. Instrument selon l'une quelconque des revendications précédentes,
**caractérisé par**
un panneau avant (7) qui constitue un cadre, l'élément de palier étant placé sous forme de bague de palier cylindrique (8) sur le côté arrière du cadre, notamment par moulage.

8. Instrument selon l'une quelconque des revendications précédentes,
**caractérisé en ce que**
l'élément glissant et/ou l'élément de guidage sont fabriqués en plastique glissant, notamment en polyoxyméthylène (POM).

9. Instrument selon l'une quelconque des revendications précédentes,
**caractérisé par**
un ergot indicateur éclairable (2) qui est orienté dans la direction radiale et qui est connecté au disque indicateur (1).

10. Instrument selon la revendication 9,
**caractérisé en ce que**
l'ergot indicateur (2) est moulé sous forme de pièce moulée orientée vers l'intérieur sur le disque annulaire ou la couronne dentée (3).

11. Instrument selon l'une quelconque des revendications précédentes,
**caractérisé en ce que**
le disque indicateur (1) présente une feuille de plaquette de circuits imprimés flexible (11) qui est collée sur la couronne dentée (3) et qui est mise en contact avec un élément de contact (12), la feuille de plaquette de circuits imprimés (11) commandant une diode lumineuse (13) éclairant l'ergot indicateur (2).
